# FASCICULE DE BREVET EUROPEEN

(11) **EP 1 533 878 B1**
(45) Date de publication et mention de la délivrance du brevet: **28.02.2007**
(21) Numéro de dépôt: 04292602.2
(22) Date de dépôt: 03.11.2004
(51) Int. Cl.: H02G 3/00

(54) **Procédé et système de préfabrication d'installations électriques**
Verfahren und System zur Vorfertigung von elektrischen Installationen
Process and system for prefabricating electrical installations

(30) Priorité: 19.11.2003 FR 0313558
(43) Date de publication de la demande: 25.05.2005
(73) Titulaire: Cassier, Hervé, 18000 Bourges (FR)
(72) Inventeur: Cassier, Hervé, 18000 Bourges (FR)
(74) Mandataire: Debay, Yves

(56) Documents cités:
- FR-A- 2 353 978
- FR-A- 2 566 593

## Description

Le procédé et le système de préfabrication d'installations électriques selon l'invention ont pour objet la préfabrication de circuits électriques destinés à être installés dans les immeubles de logements, les immeubles industriels et les immeubles tertiaires.

La technique de la préfabrication est utilisée en France depuis la fin des années 60. Elle consiste à réaliser des sous-ensembles appelés "pieuvres ou araignées", connus par les brevets FR 2 353 978 qui représente l'état de la technique le plus proche, et FR 2 566 593, et dont les noms qui proviennent de leur aspect. Les canalisations ou brins sont branchés en étoile sur une boîte de dérivation, ce qui lui donne l'allure de pieuvre ou d'araignée.

Il est actuellement utilisé deux techniques, l'une dite manuelle c'est-à-dire faite entièrement à la main, une autre dite automatique, mais l'automaticité ne concerne que la préfabrication des brins qui sont réalisés par types de faisceau. Ceux-ci sont alors stockés en râtelier et repris sur une table de montage pour être encliquetés sur la boîte de dérivation.

Ces deux méthodes nécessitent un temps de fabrication de 4 à 5 heures par logement avec les risques d'erreurs liés aux interventions manuelles. Or, la plupart de ces éléments étant destinés à être noyés dans du béton au coulage, la moindre erreur génère des reprises onéreuses.

La présente invention a pour but de pallier certains inconvénients de l'art antérieur en proposant un système de préfabrication d'installations électriques, qui permette de fortement diminuer le temps de préfabrication et surtout de réduire presque à zéro les risques d'erreurs d'atelier.

Ce but est atteint par un système de préfabrication d'installations électriques, caractérisé en ce qu'il comporte une loveuse-monteuse contenant un tambour enrouleur ou bol de lovage pourvu de moyens de maintien d'au moins une boîte de dérivation, des moyens de transfert d'une gaine équipée de fil conducteur, qui permettent de présenter cette gaine équipée devant un trou réalisé dans la boîte et prévu pour encliqueter la gaine dedans, ainsi que des moyens d'entraîner en rotation le tambour enrouleur ou le bol de lovage après encliquetage de la gaine sur la boîte de dérivation pour amener la gaine à se lover dans le tambour ou le bol.

Selon une autre particularité, les moyens de maintien de la boîte de dérivation sont disposés sur les flasques du tambour enrouleur ou aux environs du centre du bol de lovage et sont constitués d'un tube à l'extrémité libre duquel sont formés deux logements en forme d'oreilles, chacun des logements accueillant une languette de forme complémentaire formée à la base de la boîte de dérivation, ladite boîte étant alors fixée sur le tube par rotation dans le sens de lovage, cette rotation entraînant la pénétration des languettes dans une fente du tube, qui est perpendiculaire audit tube, pour bloquer la boîte en translation, et ladite fente étant munie de butées pour bloquer la boîte en rotation.

Selon une autre particularité, la loveuse-monteuse comporte au moins une rainure disposée sur les flasques du tambour enrouleur ou les parois du bol de lovage pour permettre de faire passer des moyens de lier les gaines équipées enroulées en fin de préfabrication.

Selon une autre particularité, le système de préfabrication comporte un système de perçage de la boîte de dérivation.

Selon une autre particularité, le système de préfabrication comporte une fileuse permettant d'enfiler des fils déterminés dans une gaine déterminée.

Selon une autre particularité, le système de préfabrication comporte un système de sélection de gaine comprenant des moyens de transfert pour placer la gaine sélectionnée dans l'axe de filage de la fileuse et des moyens de blocage à vérins pour bloquer la gaine en position.

Selon une autre particularité, le système de sélection de gaine est du type à barillet ou tiroir.

Selon une autre particularité, le système de préfabrication comporte :
- des moyens informatiques disposant d'un module logiciel configuré pour permettre de trier les gaines dans un ordre de montage déterminé sur la boîte de dérivation, la configuration du logiciel prenant en compte des paramètres ou caractéristiques des gaines et des fils à enfiler dans les gaines ;
- des moyens d'affichage permettant d'afficher des indications de perçage des boîtes et de montage des gaines et des fils à enfiler dans les gaines dans un ordre de montage déterminé.

Selon une autre particularité, le système de préfabrication comprend un enfileur constitué de tubes capillaires souples, qui amène les fils depuis des distributeurs de fil vers l'entrée de la fileuse.

Selon une autre particularité, le système de préfabrication comprend un dispositif de coupe de gaine disposé avant le système de sélection de gaine et un dispositif de coupe/dénudation de fil disposé en sortie de l'enfileur.

Un autre but de l'invention est de proposer un procédé de préfabrication d'installations électriques.

Ce but est atteint par un procédé, mis en oeuvre par l'intermédiaire d'une loveuse-monteuse automatique comportant un tambour enrouleur ou bol de lovage ainsi que des moyens de maintien d'au moins une boîte de dérivation, caractérisé en ce qu'il comporte :
- une étape de fixation de la boîte sur la loveuse-monteuse en utilisant les moyens de maintien ;
- une étape d'affichage, par des moyens d'affichage, d'indications de perçage de la boîte et de montage de gaines et de fils à enfiler dans les gaines, dans un ordre de montage déterminé ;
- une étape de sélection d'une gaine, d'introduction des fils conducteurs dans ladite gaine et de fixation de cette gaine par encliquetage sur un trou réalisé dans la boîte et défini par un schéma ;
- une étape d'enroulement de la gaine équipée autour de la boîte dans le tambour enrouleur ou le bol de lovage,
- les étapes précédentes étant réitérées pour chacune des gaines à raccorder sur la boîte, suivant l'ordre de montage déterminé.

Selon une autre particularité, l'étape d'enroulement des gaines équipées est suivie d'une étape de liage desdites gaines enroulées.

Selon une autre particularité, après liage des gaines, la boîte est enlevée du tambour enrouleur ou du bol de lovage, puis une deuxième boîte est fixée à la place de la première boîte dans le tambour enrouleur ou bol de lovage et une gaine équipée encliquetée sur la première boîte est raccordée à la deuxième boîte en étant encliquetée sur un trou adapté de la deuxième boîte, puis une nouvelle gaine est équipée et encliquetée sur la deuxième boîte puis lovée.

Selon une autre particularité, la sélection de la gaine est réalisée par un système de sélection, l'introduction de fil dans la gaine est réalisée par une fileuse et la fixation de la gaine sur la boîte est réalisée par un système de transfert de gaine, ces trois systèmes étant commandés par l'intermédiaire d'un module logiciel.

Selon une autre particularité, la fixation de la boîte sur la loveuse-monteuse est précédée d'une étape de perçage de trous dans la boîte grâce à un système de perçage, chacun des trous réalisés étant adapté pour recevoir une gaine équipée de fil conducteur.

Selon une autre particularité, le procédé de préfabrication comporte une étape de triage, par le module logiciel, des gaines et des fils à enfiler dans chaque gaine, dans un ordre de montage sur la boîte de dérivation, cet ordre de montage étant déterminé en fonction de paramètres ou caractéristiques des gaines et des fils à enfiler dans les gaines.

Selon une autre particularité, chacune des gaines équipées est directement fixée sur la boîte de dérivation en sortie de fileuse et lovée au fur et à mesure de sa sortie dans le tambour enrouleur ou le bol de lovage après environ 1 mètre de sortie, aucune des gaines ne se croisant.

Selon une autre particularité, les paramètres et caractéristiques des gaines et des fils pris en compte lors de l'étape de triage comprennent le diamètre et la longueur de la gaine, la couleur, la section et la sur-longueur des fils à enfiler dans la gaine, ainsi que le trou de la boîte dans lequel encliqueter la gaine équipée, ces paramètres et caractéristiques étant mémorisées dans un fichier exploitable par le module logiciel.

Selon une autre particularité, chaque gaine est coupée par un dispositif de coupe situé avant le système de sélection de gaine et chaque fil est coupé et dénudé par un dispositif de coupe/dénudation en sortie de l'enfileur.

D'autres particularités et avantages de la présente invention apparaîtront plus clairement à la lecture de la description ci-après, faite en référence aux dessins annexés, dans lesquels :
- la figure 1 représente une vue de face du système de préfabrication d'installations électriques selon l'invention,
- la figure 2 représente une vue de dessus du système de préfabrication d'installations électriques selon l'invention,
- la figure 3a représente une vue partiellement en coupe de la loveuse-monteuse et d'une boîte de dérivation percée,
- la figure 3b représente une vue de dessus du tambour enrouleur ou du bol de lovage,
- la figure 4 représente un exemple de schéma d'installation électrique à réaliser,
- la figure 5 représente un exemple de fichier traité par le module logiciel.

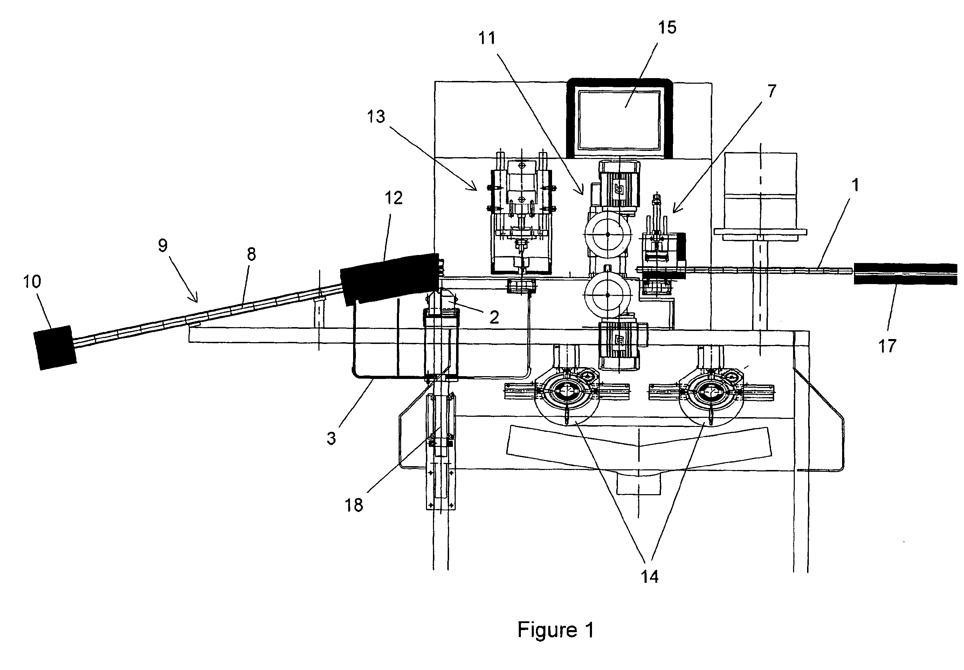

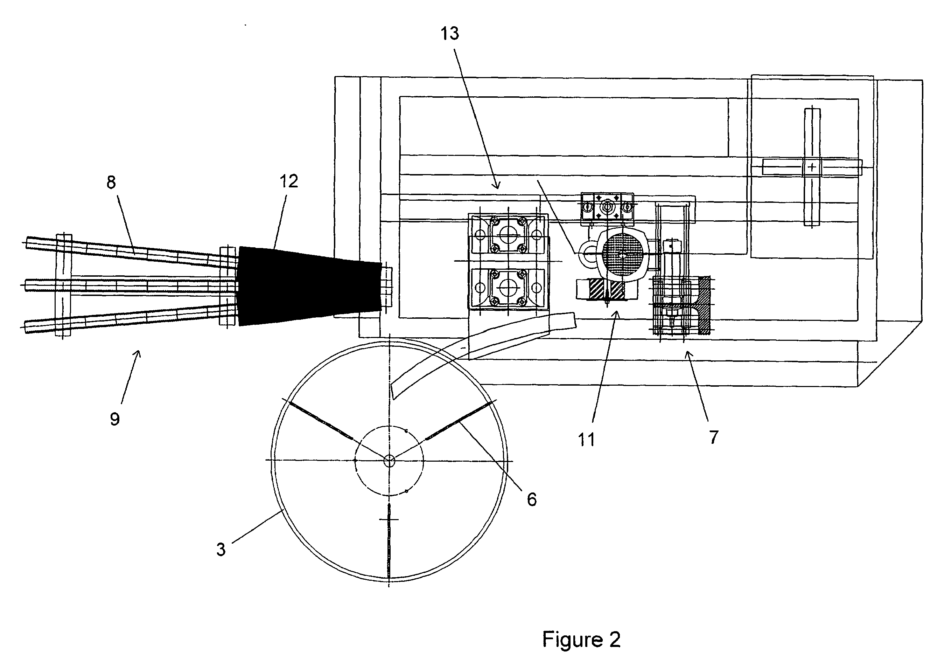

Le système de préfabrication d'installations électriques selon l'invention, représenté en particulier sur les figures 1 et 2, permet de réaliser des installations électriques constituées d'une ou plusieurs boîtes de dérivation (2) raccordées entre elles par des gaines (1) équipées de fil conducteur et sur lesquelles sont encliquetées une ou plusieurs gaines (1) également équipées de fil conducteur.

Le système de préfabrication d'installations électriques selon l'invention comporte un système de perçage (14) des boîtes de dérivation (2), des moyens d'affichage (15), des moyens informatiques, un enfileur (9), un dispositif de coupe/dénudation (12) des fils, un système de sélection (7) de gaine (1), un dispositif de coupe (17) de gaine, une fileuse (11), une loveuse-monteuse et un système de transfert (13) de la gaine équipée (1) dans la loveuse-monteuse.

L'enfileur (9) amène les fils à enfiler dans les gaines (1) sélectionnées par le système de sélection (7) depuis des distributeurs de fil (10) jusqu'à la fileuse (11). Les distributeurs de fil sont des bobines de fil de diamètres et de couleurs différents. En général, il suffit d'une vingtaine de bobines de fil différentes pour préfabriquer une installation électrique.

L'enfileur (9) est constitué de tubes capillaires (8) souples guidant chacun un fil. Cette souplesse permet d'amortir l'à-coup à la mise en rotation du ou des dérouleurs de fil. Le montage des tubes capillaires (8) avec une longueur en porte-à-faux fait office d'amortisseur à la mise en marche des dérouleurs de fils. Dans une variante de réalisation, le système peut être réalisé par une série de plaques trouées mais il ne remplira plus la fonction d'amortissement.

Le dispositif de coupe/dénudation (12), disposé en sortie de l'enfileur (9), permet de dénuder et de couper à la longueur souhaitée les fils pénétrant dans la fileuse (11).

Chaque gaine (1) à équiper est sélectionnée par le système de sélection (7) de gaine avant filage. Ce dernier est constitué d'un dispositif à tiroir (7) ou à barillet, de deux vérins assurant chacun le blocage d'une gaine, ainsi que d'un vérin de transfert permettant de placer la bonne gaine dans l'axe de filage. Le dispositif de coupe (17) de gaine, disposé en sortie du système de sélection (7) de gaine, permet de couper les gaines (1) à équiper à la longueur souhaitée.

La fileuse (11) permet d'introduire les fils sélectionnés dans la gaine (1) sélectionnée. La gaine (1) équipée est ensuite mise en place par encliquetage sur la boîte (2) fixée sur la loveuse-monteuse par le système de transfert (13) de gaine.

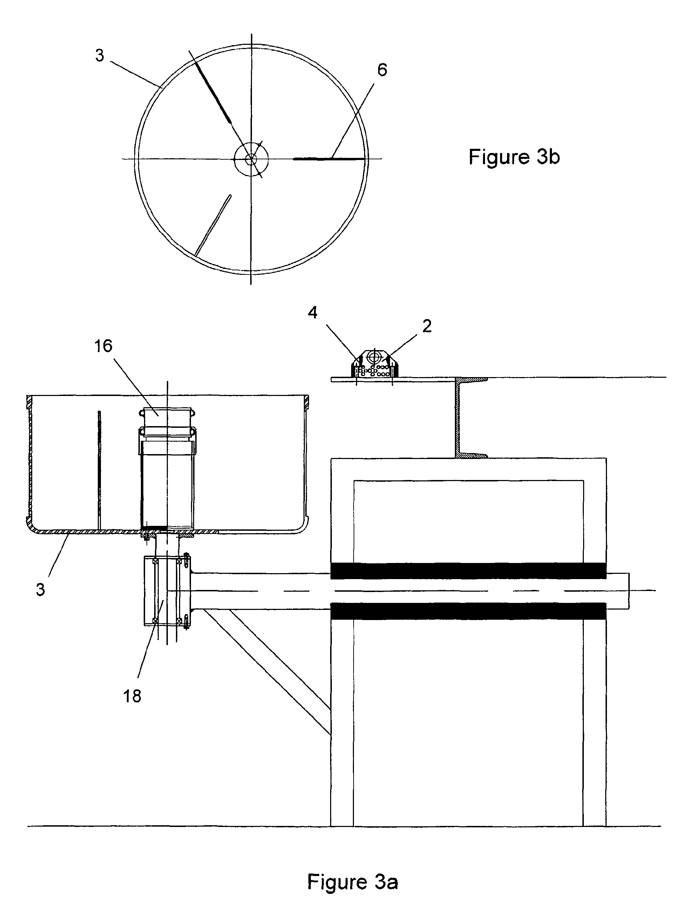

La loveuse-monteuse, représentée en particulier sur la figure 3a, comporte un tambour enrouleur ou un bol de lovage (3) sur lequel est fixée une boîte de dérivation (2) préalablement percée par le système de perçage (14), de trous (4) adaptés à l'encliquetage des gaines équipées (1). La boîte de dérivation (2) est fixée sur un support de boîte, par exemple un tube, situé sur les flasques du tambour enrouleur ou aux environs du centre de la loveuse. Le système de fixation (16) de la boîte de dérivation (2) sur ce support est, par exemple, mais de façon non limitative, un embout usiné à l'extrémité libre du tube, comme représenté sur la figure 3a. Ce système de fixation peut être fixe ou interchangeable et en tout en état de cause adapté à la boîte de dérivation (2). Dans le mode de réalisation préféré de l'invention, le système de fixation (16) de la boîte de dérivation (2) est constitué d'un tube à l'extrémité libre duquel sont formés deux logements en forme d'oreilles, chacun des logements accueillant une languette de forme complémentaire formée à la base de la boîte de dérivation, ladite boîte étant alors fixée sur le tube par rotation dans le sens de lovage, cette rotation entraînant la pénétration des languettes dans une fente du tube, qui est perpendiculaire audit tube, pour bloquer la boîte en translation, et ladite fente étant munie de butées pour bloquer la boîte en rotation.

La loveuse-monteuse peut tout aussi bien être utilisée en fabrication automatique qu'en fabrication manuelle. Toutefois, dans ce dernier cas, il n'est pas tiré tout le profit du système.

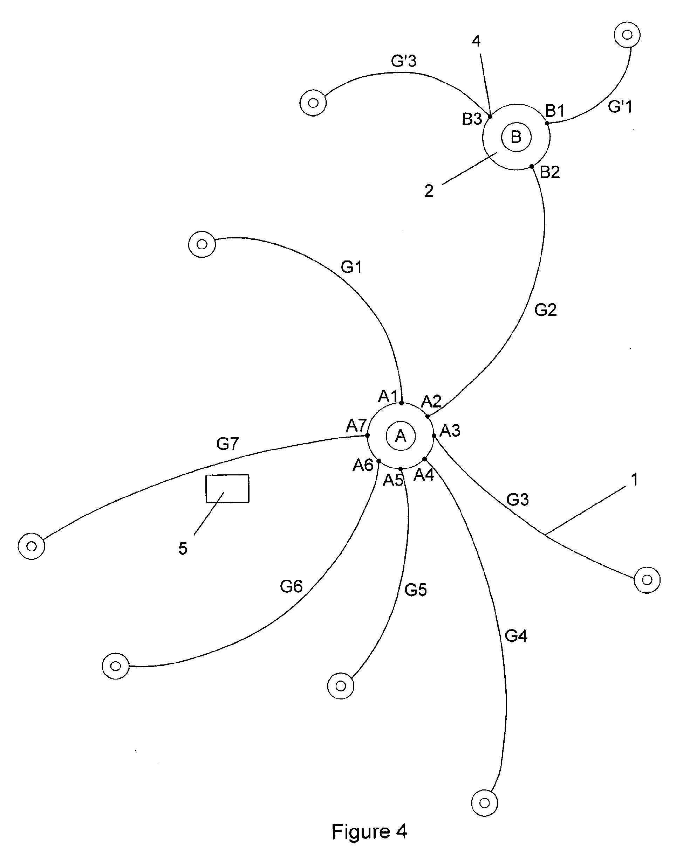

La loveuse-monteuse comporte également un système motorisé (18) permettant la rotation du tambour enrouleur ou du bol de lovage (3) autour de l'axe de symétrie de ce dernier afin d'enrouler les gaines (1) équipées autour de la boîte de dérivation (2). Ainsi, les gaines équipées (1) sont directement fixées par encliquetage sur la boîte de dérivation en sortie de fileuse et lovées au fur et à mesure de leur arrivée dans le bol de lovage par arrêt après environ 1 mètre de sortie. De proche en proche, on réalise ainsi l'installation électrique en forme de pieuvre, qui peut comporter une ou plusieurs boîtes de dérivation (2), comme représenté en particulier sur la figure 4. En fin de filage, les gaines équipées enroulées sur les boîtes de dérivation (2) sont attachées par des liures (manuelles ou automatiques), qui sont insérées via des rainures (6) pratiquées dans les flasques du tambour enrouleur ou dans les parois du bol de lovage (3).

L'ensemble des opérations décrites ci-dessus est réalisé automatiquement grâce à un automate commandé par des moyens informatiques. Les moyens informatiques comprennent également un logiciel de dessin (par exemple Autocad). Un utilisateur du procédé et du système de préfabrication selon l'invention entre en mémoire dans les moyens informatiques un schéma de l'installation électrique à réaliser, comme représenté sur la figure 4. Le schéma représente chaque boîte de dérivation (2), repérées par des lettres (A, B), et les caractéristiques (5) de chaque gaine partant de ladite boîte (diamètre et longueur de la gaine, nombre, section et sur-longueur des fils, trou de la boîte sur lequel encliqueter la gaine équipée). La sur-longueur de fil permet de raccorder l'extrémité de la gaine aux différentes prises, interrupteurs ou autres boîtiers présents dans l'appartement ou autre où l'installation électrique sera posée. Aucune des gaines ne se croise. Le repérage des fils se fait par un code de couleur.

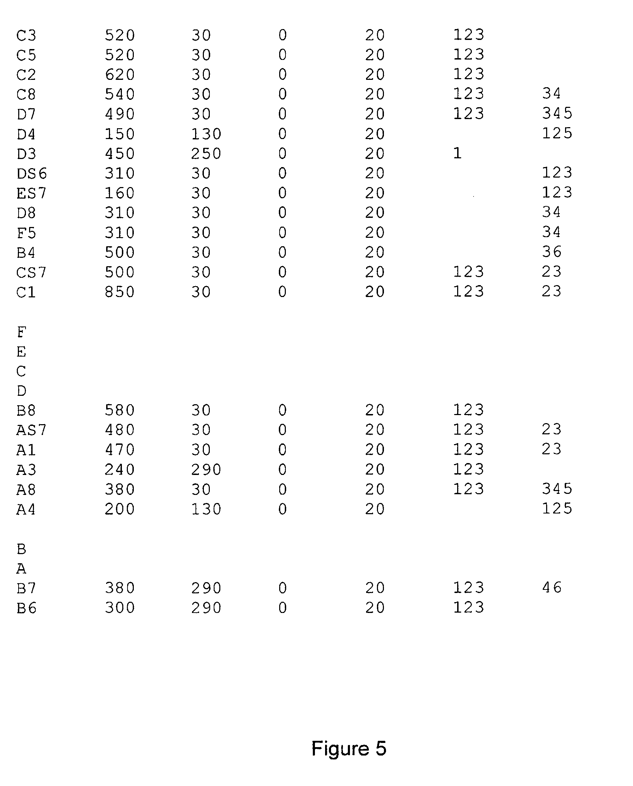

Ces éléments électroniques, apparents ou non sur le schéma, sont extraits par un utilitaire du logiciel de dessin et stockés dans un fichier texte répertorié. Un exemple de ce fichier texte est représenté sur la figure 5. Il est constitué de plusieurs colonnes. La première colonne comporte la liste des trous, repérés par des numéros, de chaque boîte, repérée par une lettre. La deuxième colonne indique la longueur de la gaine à encliqueter dans chaque trou listé dans la première colonne. La troisième colonne indique la sur-longueur de fil qui dépasse de chaque gaine. La quatrième colonne indique s'il y a ou non une boîte de réservation. La cinquième colonne indique le diamètre de chaque gaine, par exemple 20 mm. La sixième et la septième colonnes indiquent le code de couleur des fils de sections déterminées différentes, par exemple mais de façon non limitative 2,5 mm et 1,5 mm respectivement, à enfiler dans la gaine ayant les caractéristiques indiquées sur la même ligne dans les colonnes précédentes.

Le fichier texte est traité par un programme spécifique, dit module logiciel, qui trie les gaines et les fils dans l'ordre de montage de l'installation électrique et envoie cette liste à l'automate embarqué sur le système de préfabrication selon l'invention, qui la stocke. Au moment de la préfabrication de l'installation électrique, les gaines seront sélectionnées, équipées de fil conducteur, et encliquetées sur la boîte dans l'ordre de montage de l'installation électrique.

Dans un mode de réalisation préféré de l'invention, les fichiers textes triés sont stockés en file d'attente sur le système de préfabrication selon l'invention et sont exécutés à la demande par l'opérateur.

Des moyens d'affichage (15), par exemple un écran tactile, est connecté à l'automate. Ces moyens d'affichage affichent dans l'ordre les différentes étapes à réaliser par l'opérateur. Ainsi, les moyens d'affichage (15) affichent tout d'abord les caractéristiques de perçage des trous (4) à réaliser sur la boîte de dérivation (2) au moyen du système de perçage (14) : le nombre, l'emplacement et le diamètre des trous. Le système de perçage (14) comportant également une fonction poinçonneuse permettant de marquer les repères numériques des trous sur la boîte de dérivation (2), les moyens d'affichage (15) affichent également les repères numériques à poinçonner dans la boîte, au moyen du système de perçage (14). Une fois cette étape réalisée, les moyens d'affichage (15) affichent les caractéristiques (diamètre, longueur) des gaines (1) à sélectionner par le système de sélection (7) et les caractéristiques (sur-longueur, diamètre, code de couleur) des fils à tirer par l'enfileur (9) jusqu'à la fileuse (11) et à enfiler dans la bonne gaine (1) par la fileuse (11). Une fois qu'une gaine (1) est équipée, les moyens d'affichage (15) affichent le repère du trou (4) de la boîte de dérivation (2) sur lequel ladite gaine équipée (1) doit être encliquetée. La gaine équipée est transférée sur la loveuse-monteuse, soit manuellement, soit par le système de transfert (13).

Au fur et à mesure, par déroulement de pages successives, l'opérateur réalise la boîte de dérivation, aidé par l'automate qui commande les différents éléments du système de préfabrication selon l'invention. Ainsi, par exemple, la sélection et la mise en place de la gaine de bon diamètre dans l'axe de la fileuse (11) sont faits automatiquement par le système de sélection (7) de gaine après lecture des caractéristiques de la gaine (1).

L'arrêt (automatique ou par pédale au pied) après un mètre de gaine extraite pour l'encliqueter sur la boîte de dérivation (2) permet l'encliquetage.

En cas de perçage automatique des boîtes (2), les indications de perçage peuvent être faites en cours de filage.

Ce procédé de fabrication selon l'invention assure en pratique moins de 0,01% d'erreur soit environ une erreur pour 100 logements.

Les moyens d'affichage (15) sont également munis d'une page de commande manuelle des opérations par pavé numérique et fonctions assorties. Le choix des pages de démarrage est fait par le menu.

Pour illustrer le procédé de préfabrication d'installations électriques selon l'invention, l'exemple du schéma représenté sur la figure 4 a été choisi. La façon de procéder décrite ci-dessous n'est nullement limitative et peut être facilement adaptée à tout schéma d'installation électrique. Ainsi, dans cet exemple, la boîte A va être équipée en premier. Elle est d'abord percée, par le système de perçage, des trous A1 à A7 aux emplacements prévus, puis fixée dans la loveuse-monteuse. Le système de sélection (7) de gaine sélectionne ensuite la gaine G1, qui est coupée à la bonne longueur par le dispositif de coupe (17) de gaine, en tenant compte des paramètres (5) de la gaine, puis place ladite gaine G1 dans l'axe de la fileuse (11). Les fils à enfiler dans la gaine G1 sont sélectionnés (section, couleur), en tenant compte des paramètres (5) des fils, par l'opérateur ou par un système de sélection à tiroir ou à barillet du même type que celui utilisé pour sélectionner les gaines. Les fils sont ensuite tirés par l'enfileur (9), coupés et dénudés par le dispositif de coupe/dénudation (12) de fil, également en tenant compte des paramètres (5) des fils. Les fils sont alors enfilés dans la gaine G1 par la fileuse (11) puis la gaine G1 équipée des fils conducteurs est transférée par le système de transfert (13) de gaine dans la loveuse-monteuse où elle est encliquetée sur le trou A1 de la boîte A. La gaine G1 est ensuite lovée autour de la boîte. Les gaines G2 à G7 sont ensuite sélectionnées, équipées des fils adaptés, encliquetées sur la boîte A sur les trous adaptés et lovées de la même façon que la gaine G1. Les gaines G1 à G7 sont alors attachées par des liures passées par les rainures (6) du tambour enrouleur ou du bol de lovage (3) et la boîte A est retirée de la loveuse-monteuse. La boîte B, qui a été percée pendant l'équipement de la boîte A, est fixée sur la loveuse-monteuse à la place de la boîte A. La gaine G2, qui est raccordée à la boîte A, est tout d'abord encliquetée sur le trou B2 de la boîte B, puis lovée. Les gaines G'1 et G'3 sont ensuite sélectionnées, équipées des fils adaptés, encliquetées sur la boîte B sur les trous adaptés et lovées de la même façon que la gaine G1 sur la boîte A. Les gaines G'1, G2 et G'3 sont également attachées par des liures en fin de préfabrication. L'installation électrique ainsi préfabriquée est prête à livrer et à poser dans un appartement ou autre.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de préfabrication d'installations électriques, **caractérisé en ce qu'**il comporte une loveuse-monteuse contenant un tambour enrouleur ou bol de lovage (3) pourvu de moyens de maintien (16) d'au moins une boîte de dérivation (2), des moyens de transfert (13) d'une gaine (1) équipée de fil conducteur, qui permettent de présenter cette gaine (1) équipée devant un trou (4) réalisé dans la boîte (2) et prévu pour encliqueter la gaine (1) dedans, ainsi que des moyens (18) d'entraîner en rotation le tambour enrouleur ou le bol de lovage après encliquetage de la gaine (1) sur la boîte de dérivation (2) pour amener la gaine à se lover dans le tambour ou le bol (3).

2. Système de préfabrication d'installations électriques selon la revendication 1, **caractérisé en ce que** les moyens de maintien (16) de la boîte de dérivation (2) sont disposés sur les flasques du tambour enrouleur ou aux environs du centre du bol de lovage (3) et sont constitués d'un tube à l'extrémité libre duquel sont formés deux logements en forme d'oreilles, chacun des logements accueillant une languette de forme complémentaire formée à la base de la boîte de dérivation, ladite boîte étant alors fixée sur le tube par rotation dans le sens de lovage, cette rotation entraînant la pénétration des languettes dans une fente du tube, qui est perpendiculaire audit tube, pour bloquer la boîte en translation, et ladite fente étant munie de butées pour bloquer la boîte en rotation.

3. Système de préfabrication d'installations électriques selon la revendication 1 ou 2, **caractérisé en ce que** la loveuse-monteuse comporte au moins une rainure (6) disposée sur les flasques du tambour enrouleur ou les parois du bol de lovage (3) pour permettre de faire passer des moyens de lier les gaines (1) équipées enroulées en fin de préfabrication.

4. Système de préfabrication d'installations électriques selon une des revendications 1 à 3, **caractérisé en ce qu'**il comporte un système de perçage (14) de la boîte de dérivation (2).

5. Système de préfabrication d'installations électriques selon une des revendications 1 à 4, **caractérisé en ce qu'**il comporte une fileuse (11) permettant d'enfiler des fils déterminés dans une gaine (1) déterminée.

6. Système de préfabrication d'installations électriques selon la revendication 5, **caractérisé en ce qu'**il comporte un système de sélection (7) de gaine (1) comprenant des moyens de transfert pour placer la gaine sélectionnée dans l'axe de filage de la fileuse (11) et des moyens de blocage à vérins pour bloquer la gaine en position.

7. Système de préfabrication d'installations électriques selon la revendication 6, **caractérisé en ce que** le système de sélection (7) de gaine (1) est du type à barillet ou tiroir.

8. Système de préfabrication d'installations électriques selon une des revendications 1 à 7, **caractérisé en ce qu'**il comporte :
- des moyens informatiques disposant d'un module logiciel configuré pour permettre de trier les gaines (1) dans un ordre de montage déterminé sur la boîte de dérivation (2), la configuration du logiciel prenant en compte des paramètres ou caractéristiques (5) des gaines et des fils à enfiler dans les gaines ;
- des moyens d'affichage (15) permettant d'afficher des indications de perçage des boîtes et de montage des gaines et des fils à enfiler dans les gaines dans un ordre de montage déterminé.

9. Système de préfabrication d'installations électriques selon une des revendications 1 à 7, **caractérisé en ce qu'**il comprend un enfileur (9) constitué de tubes capillaires (8) souples, qui amène les fils depuis des distributeurs de fil (10) vers l'entrée de la fileuse (11).

10. Système de préfabrication d'installations électriques selon une des revendications 1 à 7, **caractérisé en ce qu'**il comprend un dispositif de coupe (17) de gaine disposé avant le système de sélection (7) de gaine et un dispositif de coupe/dénudation (12) de fil disposé en sortie de l'enfileur (9).

11. Procédé de préfabrication d'installations électriques, mis en oeuvre par l'intermédiaire d'une loveuse-monteuse automatique comportant un tambour enrouleur ou bol de lovage (3) ainsi que des moyens de maintien (16) d'au moins une boîte de dérivation (2) selon la revendication 1, **caractérisé en ce qu'**il comporte :
- une étape de fixation de la boîte (2) sur la loveuse-monteuse en utilisant les moyens de maintien (16) ;
- une étape d'affichage, par des moyens d'affichage (15), d'indications de perçage de la boîte (2) et de montage de gaines et de fils à enfiler dans les gaines, dans un ordre de montage déterminé ;
- une étape de sélection d'une gaine (1) d'introduction des fils conducteurs dans ladite gaine (1) et de fixation de cette gaine par encliquetage sur un trou (4) réalisé dans la boîte et défini par un schéma ;
- une étape d'enroulement de la gaine (1) équipée autour de la boîte (2) dans le tambour enrouleur ou le bol de lovage (3),
- les étapes précédentes étant réitérées pour chacune des gaines à raccorder sur la boîte, suivant l'ordre de montage déterminé.

12. Procédé selon la revendication 11, **caractérisé en ce que** l'étape d'enroulement des gaines (1) équipées est suivie d'une étape de liage desdites gaines enroulées.

13. Procédé selon la revendication 11 ou 12, **caractérisé en ce que**, après liage des gaines (1), la boîte (2) est enlevée du tambour enrouleur ou du bol de lovage (3), puis une deuxième boîte est fixée à la place de la première boîte dans le tambour enrouleur ou bol de lovage (3) et une gaine équipée encliquetée sur la première boîte (2) est raccordée à la deuxième boîte en étant encliquetée sur un trou (4) adapté de la deuxième boîte, puis une nouvelle gaine est équipée et encliquetée sur la deuxième boîte puis lovée.

14. Procédé selon une des revendications 11 à 13, **caractérisé en ce que** la fixation de la boîte (2) sur la loveuse-monteuse est précédée d'une étape de perçage de trous (4) dans la boîte grâce à un système de perçage (14), chacun des trous réalisés étant adapté pour recevoir une gaine (1) équipée de fil conducteur.

15. Procédé selon une des revendications 11 à 14, **caractérisé en ce que** la sélection de la gaine (1) est réalisée par un système de sélection (7), l'introduction de fil dans la gaine (1) est réalisée par une fileuse (11) et la fixation de la gaine (1) sur la boîte (2) est réalisée par un système de transfert (13) de gaine, ces trois systèmes (7, 11, 13) étant commandés par l'intermédiaire d'un module logiciel.

16. Procédé selon la revendication 15, **caractérisé en ce qu'**il comporte une étape de triage, par le module logiciel, des gaines et des fils à enfiler dans chaque gaine (1), dans un ordre de montage sur la boîte de dérivation (2), cet ordre de montage étant déterminé en fonction de paramètres ou caractéristiques (5) des gaines et des fils à enfiler dans les gaines.

17. Procédé selon la revendication 15 ou 16, **caractérisé en ce que** chacune des gaines (1) équipées est directement fixée sur la boîte de dérivation (2) en sortie de fileuse (11) et lovée au fur et à mesure de sa sortie dans le tambour enrouleur ou le bol de lovage (3) après environ 1 mètre de sortie, aucune des gaines ne se croisant.

18. Procédé selon la revendication 16 ou 17, **caractérisé en ce que** les paramètres et caractéristiques (5) des gaines et des fils pris en compte lors de l'étape de triage comprennent le diamètre et la longueur de la gaine (1), la couleur, la section et la sur-longueur des fils à enfiler dans la gaine, ainsi que le trou (4) de la boîte (2) dans lequel encliqueter la gaine équipée, ces paramètres et caractéristiques étant mémorisées dans un fichier exploitable par le module logiciel.

19. Procédé selon une des revendications 16 à 18, **caractérisé en ce que** chaque gaine (1) est coupée par un dispositif de coupe (17) situé avant le système de sélection (7) de gaine et chaque fil est coupé et dénudé par un dispositif de coupe/dénudation (12) en sortie de l'enfileur (9).

## Claims

1. System for prefabricating electric installations, **characterised in that** it comprises a coiler-mounter containing a winding drum or coiling bowl (3) provided with means (16) for holding at least one distribution box (2), transfer means (13) for a sheath (1) equipped with lead wire, which make it possible to present this equipped sheath (1) in front of a hole (4) made in the box (2) and designed for the sheath (1) to snap on, as well as means (18) for driving the winding drum or the coiling bowl in rotation after snapping the sheath (1) onto the distribution box (2) In order to cause the sheath to be coiled in the drum or the bowl (3).

2. System for prefabricating electric installations according to Claim 1, **characterised in that** the means (16) for holding the distribution box (2) are arranged on the flanges of the winding drum or in the vicinity of the centre of the coiling bowl (3) and are constituted by a tube, at the free end of which two lug-shaped housings are formed, each of the housings accommodating a tab, complementary in shape, formed at the base of the distribution box, said box then being fixed to the tube by rotation in the direction of coiling, this rotation entailing the penetration of the tabs into a slit in the tube, which is perpendicular to said tube, in order to lock the box in translation, and said slit being provided with stops for locking the box in rotation.

3. System for prefabricating electric Installations according to Claim 1 or 2, **characterised in that** the coller-mounter comprises at least one groove (6) arranged on the flanges of the winding drum or the walls of the coiling bowl (3) in order to allow means for binding the equipped sheaths (1), rolled up at the end of prefabrication, to be passed through.

4. System for prefabricating electric installations according to one of Claims 1 to 3, **characterised in that** it comprises a system (14) for boring the distribution box (2).

5. System for prefabricating electric installations according to one of Claims 1 to 4. **characterised in that** it comprises a threader (11) making it possible to thread predetermined wires into a given sheath (1).

6. System for prefabricating electric installations according to Claim 5, **characterised in that** it comprises a system (7) for selecting a sheath (1) comprising transfer means for placing the selected sheath in the axis of threading of the threader (11) and locking means with actuators for locking the sheath in position.

7. System for prefabricating electric installations according to Claim 6, **characterised in that** the system (7) for selecting a sheath (1) is of the turret or slide type.

8. System for prefabricating electric installations according to one of Claims 1 to 7, **characterised in that** it comprises:
- data processing means having a software module configured to make it possible to sort the sheaths (1) in a given order of mounting on the distribution box (2), the configuration of the software taking account of the parameters or characteristics (5) of the sheaths and wires to be threaded into the sheaths;
- display means (15) making it possible to display information on the boring of the boxes and the mounting of the sheaths and wires to be threaded into the sheaths in a given order of mounting.

9. System for prefabricating electric installations according to one of Claims 1 to 7, **characterised in that** it comprises a threading device (9) constituted by flexible capillary tubes (8), which threading device brings wire from the wire distributors (10) to the inlet of the threader (11).

10. System for prefabricating electric installations according to one of Claims 1 to 7, **characterised in that** it comprises a sheath cutting device (17) placed in front of the sheath selection system (7) and a wire cutting/stripping device (12) placed at the outlet of the threading device (9).

11. Method for prefabricating electric installations, implemented via an automatic coiler-mounter comprising a winding drum or coiling bowl (3) together with means (16) for holding at least one distribution box (2) according to Claim 1, **characterised in that** it comprises:
- a step of fixing the box (2) on the coiler-mounter by using the holding means (16);
- a step of displaying, by display means (15), information on the boring of the box (2) and the mounting of the sheaths and wires to be threaded into the sheaths, in a given order of mounting:
- a step of selecting a sheath (1) for introducing lead wires into said sheath (1) and of fixing this sheath by snapping onto a hole (4) made in the box and defined by a diagram:
- a step of rolling up the equipped sheath (1) around the box (2) in the winding drum or the coiling bowl (3),
- the preceding steps being repeated for each of the sheaths to be connected to the box, in the given order of mounting.

12. Method according to Claim 11, **characterised in that** the step of rolling up the equipped sheaths (1) is followed by a step of binding said rolled-up sheaths.

13. Method according to Claim 11 or 12, **characterised in that**, after binding the sheaths (1), the box (2) is removed from the winding drum or coiling bowl (3), then a second box is fixed in the place of the first box in the winding drum or coiling bowl (3) and an equipped sheath snapped onto the first box (2) is connected to the second box while being snapped over a suitable hole (4) in the second box, then a new sheath is equipped and snapped onto the second box then coiled.

14. Method according to one of Claims 11 to 13, **characterised in that** the fixing of the box (2) on the coiler-mounter is preceded by a step of boring holes (4) in the box by means of a boring system (14), each of the holes made being suitable for receiving a sheath (1) equipped with lead wire.

15. Method according to one of Claims 11 to 14, **characterised in that** the sheath (1) is selected by a selection system (7), the wire is introduced into the sheath (1) by a threader (11) and the sheath (1) is fixed onto the box (2) by a sheath transfer system (13), these three systems (7, 11, 13) being controlled by means of a software module.

16. Method according to Claim 15, **characterised in that** it comprises a step, performed by the software module, of sorting the sheaths and wires to be threaded into each sheath (1), in an order of mounting on the distribution box (2), this order of mounting being determined as a function of parameters or characteristics (5) of the sheaths and wires to be threaded into the sheaths.

17. Method according to Claim 15 or 16, **characterised in that** each of the sheaths (1) with its equipment is fixed directly to the distribution box (2) at the outlet of the threader (11) and is coiled as it emerges in the winding drum or the coiling bowl (3) after approximately 1 metre has emerged, none of the sheaths crossing.

18. Method according to Claim 16 or 17, **characterised in that** the parameters and characteristics (5) of the sheaths and wires taken into account at the time of the sorting step comprise the diameter and the length of the sheath (1), the colour, the section and the trimming margin of the wires to be threaded into the sheath, as well as the hole (4) of the box (2) into which the equipped sheath is to be snapped, these parameters and characteristics being stored in a file that can be exploited by the software module.

19. Method according to one of Claims 16 to 18, **characterised in that** each sheath (1) is cut by a cutting device (17) located in front of the sheath selection system (7) and each wire is cut and stripped by a cutting/stripping device (12) at the outlet of the threading device (9).

## Patentansprüche

1. System zur Fertigung von elektrischen Installationen, **dadurch gekennzeichnet, dass** dieses eine Wickel- und Montagevorrichtung umfasst, welche eine Trommel zum Aufwickeln oder einen Wickelrotor (3) beinhaltet, der mit Haltevorrichtungen (16) für mindestens eine Verteilerdose (2) vorgesehen ist, sowie Transfermittel (13) für eine Isolierhülle (1), die einen Leiterdraht enthält, so dass diese Isolierhülle (1) vor eine Öffnung (4) gebracht werden kann, die sich in der Dose (2) befindet und zum Einrasten der Isolierhülle (1) in dieser Öffnung vorgesehen ist, sowie Antriebsmittel (18) zum Drehen der Trommel oder des Wickelrotors nach dem Einrasten der Isolierhülle (1) in der Verteilerdose (2), wonach sich die Isolierhülle (1) in der Trommel oder dem Rotor (3) aufwickelt.

2. System zur Fertigung von elektrischen Installationen nach Anspruch 1, **dadurch gekennzeichnet, dass** die Haltevorrichtungen (16) der Verteilerdose (2) auf den Scheiben der Aufwickeltrommel oder in der Nähe des Zentrums des Wickelrotors (3) angeordnet sind und aus einem Rohr gebildet sind, an dessen freiem Ende zwei ohrmuschelförmige Hohlstellen ausgebildet sind, wobei jede Hohlstelle einen Bremsschuh mit komplementärer Form an der Basis der Verteilerdose aufnimmt, wobei die Verteilerdose dann auf dem Rohr durch Drehen im Wickelsinn befestigt wird, wobei diese Drehung das Eindringen der Bremsschuhe In einen Schlitz des Rohres, der senkrecht auf das Rohr ausgebildet ist, bewirkt, um somit die Verteilerdose an einer Translation zu hindern, und wobei der Schlitz mit Endbegrenzern versehen ist, um die Verteilerdose gegen Rotation zu blockieren.

3. System zur Fertigung von elektrischen Installationen nach Anspruch 1 oder 2, **dadurch gekennzeichnet, dass** die Wickel- und Montagevorrichtung mindestens eine Rille (6) umfasst, die an den Scheiben der Aufwickeltrommel oder an den Wänden des Wickelrotors (3) vorgesehen ist, um den Durchtritt der Verbindungsmittel der Isolierhüllen (1), die für die Fertigung vorgesehen sind, zu gestatten.

4. System zur Fertigung von elektrischen Installationen nach einem der Ansprüche 1 bis 3, **dadurch gekennzeichnet, dass** es ein System zum Durchbohren (14) der Verteilerdose (2) umfasst.

5. System zur Fertigung von elektrischen Installationen nach einem der Ansprüche 1 bis 4, **dadurch gekennzeichnet, dass** es eine Einfädelvorrichtung (11) beinhaltet, welche das Einfädeln von vorbestimmten Leiterdrähten in vorbestimmte Isolierhüllen (1) gestattet.

6. System zur Fertigung von elektrischen Installationen nach Anspruch 5, **dadurch gekennzeichnet, dass** es ein System (7) zur Auswahl der Isollerhüllen (1) beinhaltet, welches Transfermittel umfasst, die es ermöglichen, die ausgewählte Isolierhülle (1) In den Einfädelkopf der Elnfädelvorrichtung (11) zu positionieren, und Befestigungsmittel mit Klemmhebeln, um die Isolierhülle in dieser Positon festzuhalten.

7. System zur Fertigung von elektrischen Installationen nach Anspruch 6, **dadurch gekennzeichnet, dass** das System (7) zur Auswahl der Isolierhüllen (1) vom Typ her zylindrisch oder schubladenartig ist.

8. System zur Fertigung von elektrischen Installationen nach einem der Ansprüche 1 bis 7, **dadurch gekennzeichnet, dass** es Folgendes umfasst:
- Datenverarbeitungsmittel, die ein Softwaremodul beinhalten, das dafür konfiguriert ist, die Isolierhüllen (1) nach einer vorgegebenen Reihenfolge der Montage an die Verteilerdosen (2) auszuwählen, wobei die Softwarekonfiguration Parameter und Kenngrößen (5) der zu verwendenden Isolierhüllen und Leiterdrähte berücksichtigt;
- Anzeigemittel (15), die es ermöglichen, die Hinweise für die Durchbohrung der Verteilerdosen (2) und die Montage der Isolierhüllen und Leiterdrähte, die eingefädelt werden sollen, in der vorgegebenen Reihenfolge anzuzeigen.

9. System zur Fertigung von elektrischen Installationen nach einem der Ansprüche 1 bis 7, **dadurch gekennzeichnet, dass** es eine Elnfädelvorrichtung (9) beinhaltet, die aus dünnen Kapillarrohren (8) gebildet ist, die die Leiterdrähte von den Drähteverteilern (10) zum Kopf der Einfädelvorrichtung (11) führen.

10. System zur Fertigung von elektrischen Installationen nach einem der Ansprüche 1 bis 7, **dadurch gekennzeichnet, dass** es eine Schneidevorrichtung für Isolierhüllen (1) beinhaltet, die vor dem System (7) zur Auswahl der Isolierhüllen angeordnet ist und eine Vorrichtung zum Schneiden und Abisolleren (12) der Leiterdrähte, die am Ausgang der Einfädelvorrichtung (9) vorgesehen ist.

11. Verfahren zur Fertigung von elektrischen Installationen, praktisch umgesetzt mittels einer automatischen Wickel- und Montagevorrichtung, die eine Trommel zum Aufwickeln oder einen Wickelrotor (3) beinhaltet, sowie Haltevorrichtungen (16) für mindestens eine Verteilerdose (2) nach Anspruch 1, **dadurch gekennzeichnet, dass** das Verfahren Folgendes umfasst:
- eine Etappe der Befestigung der Dose (2) auf der Wickel- und Montagevorrichtung unter Verwendung der Haltevorrichtnugen (16);
- eine Etappe der Anzeige durch die Anzeigemittel (15) der Hinweise für die Durchbohrung der Dose (2) und für die Montage der Isolierhüllen und der Leiterdrähte, die eingefädelt werden sollen, in der vorgegebenen Reihenfolge;
- eine Etappe der Auswahl der Isolierhülle (1), der Einführung der Leiterdrähte in die Isolierhülle (1) und der Befestigung dieser Isolierhülle durch Einrasten in eine Öffnung (4), erzeugt in der Dose und definiert in einem Schema;
- eine Etappe des Umwickelns der vorgesehenen Isolierhülle (1) um die Dose (2) aus der Aufwickeltrommel oder dem Wickelrotor (3),
- die vorherigen Etappen werden für jede Isolierhülle, die an der Dose montiert werden soll, gemäß einer vorgegebenen Reihenfolge der Montage wiederholt.

12. Verfahren nach Anspruch 11, **dadurch gekennzeichnet, dass** nach der Etappe des Aufwickelns der vorgesehenen Isolierhüllen (1) eine Etappe der Verbindung der aufgewickelten Isolierhüllen folgt.

13. Verfahren nach Anspruch 11, **dadurch gekennzeichnet, dass** nach dem Verbinden der Isolierhüllen (1) die Dose (2) aus der Aufwickeltrommel oder dem Wickelrotor (3) herausgenommen wird, danach eine zweite Dose im Wickelrotor (3) an Stelle der ersten befestigt wird und eine vorgesehene, auf der ersten Dose (2) eingerastete Isolierhülle mit der zweiten Dose verbunden wird, Indem sie in eine angepasste Öffnung (4) der zweiten Dose eingerastet wird, danach eine weitere Isolierhülle vorgesehen wird und in der zweiten Dose eingerastet und danach aufgewickelt wird.

14. Verfahren nach einem der Ansprüche 11 bis 13, **dadurch gekennzeichnet, dass** der Befestigung der Dose (2) auf der Wickel- und Montagevorrichtung eine Etappe der Bohrung von Öffnungen (4) in der Dose mit Hilfe einer Bohrvorrichtung (14) vorausgeht, wobei jede Bohrung für die Aufnahme einer mit Leiterdraht ausgestatteten Isolierhülle (1) vorgesehen ist.

15. Verfahren nach einem der Ansprüche 11 bis 14, **dadurch gekennzeichnet, dass** die Wahl der Isolierhülle (1) von einem Auswahlsystem (7) vorgenommen wird, das Einführen des Leiterdrahts in die Isolierhülle (1) von einer Einfädelvorrichtung (11) ausgeführt wird und die Befestigung der Isolierhülle (1) auf der Dose (2) von einem Transfersystem (13) der Isolierhüllen durchgeführt wird, wobei diese drei Systeme (7, 11, 13) mittels einem Softwaremodul gesteuert werden.

16. Verfahren nach Anspruch 15, **dadurch gekennzeichnet, dass** dieses eine vom Softwaremodul vorgenommene Auswahletappe der Isolierhüllen und der Leiterdrähte umfasst, die in jede Isolierhülle (1) eingeführt werden sollen, sowie einer Montagereihenfolge auf der Verteilerdose (2), wobei diese Montagereihenfolge von den Parametern und Kenngrößen (5) der Isolierhüllen und der einzuführenden Leiterdrähte bestimmt ist.

17. Verfahren nach Anspruch 15 oder 16, **dadurch gekennzeichnet, dass** jede der vorgesehenen Isolierhüllen (1) am Ausgang der Einfädelvorrichtung (11) direkt auf der Verteilerdose (2) befestigt wird und beim Heraustreten nach etwa einem Meter auf die Trommel oder den Wickelrotor (3) aufgewickelt wird, ohne dass sich die Isolierhüllen überkreuzen.

18. Verfahren nach Anspruch 16 oder 17, **dadurch gekennzeichnet, dass** die Parameter und Kenngrößen (5) der Isolierhüllen und Leitungsdrähte, die in der Auswahletappe berücksichtigt werden, den Durchmesser und die Länge der Isolierhülle (1), die Farbe, den Querschnitt und den Längenüberschuss der Leitungsdrähte, die in die Isolierhüllen (1) eingeführt werden sollen, sowie die Öffnung (4) der Dose (2), in welche die vorgesehene Isolierhülle eingerastet wird, einschließen, wobei diese Parameter und Kenngrößen in einer Datei gespeichert werden, die von dem Softwaremodul gelesen werden kann.

19. Verfahren nach einem der Ansprüche 16 bis 18, **dadurch gekennzeichnet, dass** jede Islolierhülle (1) von einer Schneidevorrichtung (17) geschnitten wird, die vor dem Auswahlsystem (7) der Isolierhüllen angeordnet ist, und jeder Leitungsdraht von einer Schneide- und Abisollervorrichtung (12) beim Ausgang aus der EInfädelvorrichtung (9) geschnitten und abisoliert wird.
